# EUROPEAN PATENT SPECIFICATION

(11) **EP 0 717 262 B1**
(45) Date of publication and mention of the grant of the patent: **09.06.1999**
(21) Application number: 95119840.7
(22) Date of filing: 15.12.1995
(51) Int. Cl.: G01C 19/56

(54) **Vibrating gyroscope**
Schwingkreisel
Gyroscope à vibration

(30) Priority: 16.12.1994 JP 33424594
(43) Date of publication of application: 19.06.1996
(73) Proprietor: MURATA MANUFACTURING CO., LTD., Nagaokakyo-shi Kyoto-fu 226 (JP)
(72) Inventor: Fujimoto, Katsumi, c/o Murata Manuf. Co., Ltd., Nagaokakyo-shi, Kyoto-fu (JP); Ebara, Kazuhiro, c/o Murata Manuf. Co., Ltd., Nagaokakyo-shi, Kyoto-fu (JP)
(74) Representative: Schoppe, Fritz, Dipl.-Ing.

(56) References cited:
- GB-A- 2 282 259
- PATENT ABSTRACTS OF JAPAN vol. 017 no. 014 (P-1467) ,11 January 1993 & JP-A-04 242114 (JAPAN AVIATION ELECTRON IND LTD) 28 August 1992,

## Description

### Background of the Invention

This invention relates to a vibrating gyroscope, and particularly for example to a vibrating gyroscope used in a navigation system or a camera shake detecting system.

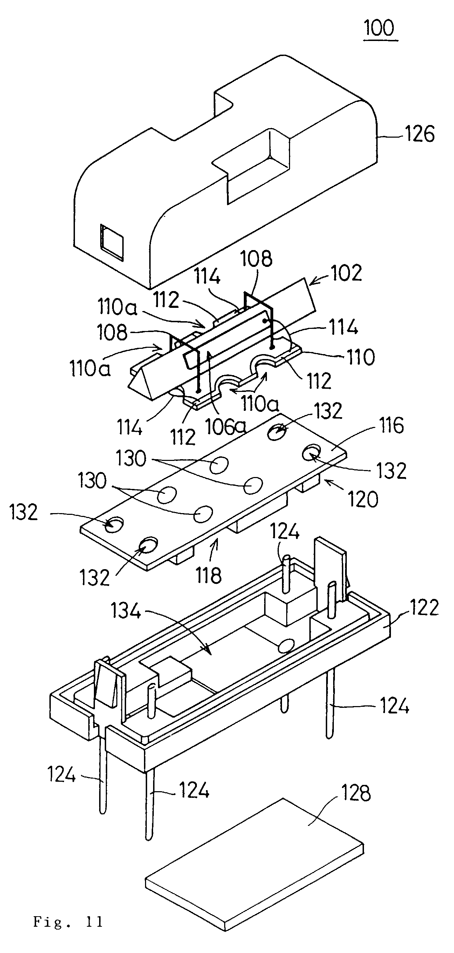

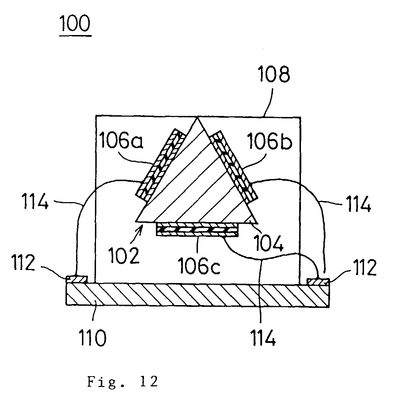

Fig. 11 is an exploded perspective view of an example of a conventional vibrating gyroscope, and Fig. 12 is a sectional view of a main part of the same vibrating gyroscope. This vibrating gyroscope 100 comprises a vibrator 102. The vibrator 102 comprises a cross-sectionally triangular vibrating body 104, and, as shown in Fig. 12, piezoelectric devices 106a, 106b and 106c are attached to the respective sides of the vibrating body 104. These piezoelectric devices 106a, 106b and 106c each comprise electrodes formed on both sides of, for example, a piezoelectric ceramic.

As shown in Fig. 11, supporting members 108 comprising substantially U-shaped wires are attached to the apex part of the vibrating body 102 near each of two node points thereof. The ends of these support members 108 are fixed to a flat mounting board 110. A plurality of terminal electrodes 112 are formed on the mounting board 110. These terminal electrodes 112 are severally electrically connected to the piezoelectric devices 106a to 106c on the vibrating body 102 by lead wires 114.

A plurality of substantially U-shaped concave portions 110a for adjusting the resonance frequency of the vibrating body 102 are formed in opposite sides of the mounting board 110. When adjusting the resonance frequency of the vibrating body 102, a measuring probe can be inserted through these concave portions 110a and brought into contact with the terminal electrodes 112 and the output of the vibrating body 102 can be measured with the measuring probe while adjustment of the resonance frequency is carried out.

This mounting board 110 is fixed to a circuit board 116. An oscillating circuit 118 and a detecting circuit 120 are mounted on the underside of the circuit board 116. These circuits are electrically connected by way of through holes or the like (not shown in the drawings) to four electrodes 130 formed on the upper side of the circuit board 116. These electrodes 130 are electrically connected to the terminal electrodes 112 on the mounting board 110, for example, by soldering. Through holes 132 are formed at the four corners of the circuit board 116. Four external terminals 124, which will be further discussed later, are passed through the through holes 132.

The circuit board 116 with the mounting board 110 mounted thereon is fixed to a base member 122. The base member 122 is made of, for example, resin. The four external terminals 124 are provided passing through the base member 122 in the thickness direction thereof. These external terminals 124 pass through the four through holes 132 in the circuit board 116 and are electrically connected thereto by a method, such as soldering. The external terminals 124 pass through an electrode pattern (not shown in the drawings) on the circuit board 116 and are electrically connected to a circuit on the circuit board 116. A case 126 is fitted to the base member 122 and the vibrating body 102, the mounting board 110 and the circuit board 116 are housed inside the case 126. A substantially rectangular anti-vibration member 128 made of, for example, resin is fixed to the underside of the base member 122. The anti-vibration member 128 is for sealing a through hole 134 for trimming provided in the central portion of the base member 122 and absorbing vibration of the vibration gyroscope 100.

The vibrating body 104 of this vibrating gyroscope 100 is caused by the oscillating circuit 118 to undergo bending vibration in a direction orthogonal to the plane of the piezoelectric device 106c. In this state, when a rotation about the axial direction of the vibrating body 104 is applied, the vibrating direction of the vibrating body 104 changes due to the Coriolis force and a corresponding difference in the output voltages of the piezoelectric devices 106a and 106b arises. By detecting this difference, by means of the detecting circuit 120, it is possible to detect the turning angular velocity applied to the vibrating gyroscope 100.

However, because this kind of conventional vibration gyroscope 100 has a large number of parts it is difficult to assemble and there are also a lot of solder connections. Consequently, the manufacturing process of a conventional vibrating gyroscope 100 is unduly complicated. Also, because in a conventional vibration gyroscope 100, the vibrating body 102, the support members 108, the mounting board 110, the circuit board 116 and the base member 122 are disposed stacked in the height direction, the vibrating gyroscope 100 is unduly tall. As a result, when the vibrating gyroscope 100 is mounted on another apparatus, it occupies an undue amount of space in the height direction and constitutes an obstacle to reducing the size of the apparatus.

### Summary of the invention

Accordingly, a main object of the present invention is to provide a vibrating gyroscope in which the number of parts can be reduced and the manufacturing process can be simplified and which can be made of low-height.

These and other objects of the invention are achieved by a vibrating gyroscope according to claim 1, which includes, among other parts, a vibrating body, exciting means attached to said vibrating body for exciting said vibrating body, vibration receiving means attached to said vibrating body for receiving the vibration of said vibrating body and outputting a vibration signal, means for supporting said vibrating body, a support board having electrodes embedded therein for supporting the support means, and means for electrically connecting the exciting means and the vibration receiving means to the electrodes embedded in the support board.

The invention in a preferred embodiment provides a vibrating gyroscope comprising a vibrating body, support members for supporting the vibrating body near node points thereof, a support board for mounting the support members and a circuit part electrically connected to the vibrating body, wherein the support board comprises a board proper made of an insulating material, terminal electrodes for electrically connecting to the vibrating body, connecting electrodes for electrically connecting to the circuit part and external terminals for electrically connecting to an outside apparatus, and the terminal electrodes, the connecting electrodes and the external terminals are connected to each other and formed integrally with the board proper.

The terminal electrodes, the connecting electrodes and the external terminals may be formed integrally from metal sheet.

The circuit part is preferably mounted on the support board together with the vibrating body.

The vibrating body is supported by the support members and the support members are supported by the support board. The vibrating body is electrically connected to the terminal electrodes provided integrally with the board proper of the support board. These terminal electrodes are linked inside the board proper to the connecting electrodes. The connecting electrodes are electrically connected to the circuit part. As a result, the vibrating body is electrically connected to the circuit part via the terminal electrodes and the connecting electrodes. Also, the circuit part is electrically connected to an outside apparatus via the external terminals provided integrally with the board proper of the support board.

With a vibrating gyroscope according to the invention, because terminal electrodes, connecting electrodes and external terminals are formed integrally inside the board proper of the support board, the amount of soldering involved in assembling the gyroscope can be reduced and it is possible to simplify the manufacturing process. Furthermore, because the support board performs the functions of both the mounting board and the base member of the conventional vibrating gyroscope described above, compared to a conventional vibrating gyroscope wherein these are formed as separate parts, reduction of the number of parts is possible and the construction can be simplified. As a result, assembly is made easy. Also, because the number of parts is reduced it is possible to reduce the cost of the gyroscope.

Moreover, by mounting the circuit part alongside the vibrating body instead of stacking it with respect to the vibrating body in the height direction thereof, it is possible to make the vibrating gyroscope low-height. As a result, even when the vibrating gyroscope of the invention is built into an apparatus such as for example a navigation system or a camera shake detecting system, the vibration gyroscope does not prevent the apparatus from being made compact.

The above-mentioned object and other objects, characteristics and merits of the invention will become more clear from the following detailed description of the preferred embodiment(s) thereof made with reference to the accompanying drawings.

### Brief Description of the Drawings

- Fig. 1: is an exploded perspective view of an embodiment of the invention.
- Fig. 2: is a sectional view of a main part of the embodiment shown in Fig. 1.
- Fig. 3: is a partial cutaway front view of the embodiment shown in Fig. 1.
- Fig. 4: is a partial cutaway plan view of the embodiment shown in Fig. 1.
- Fig. 5: is a sectional view on the line V-V in Fig. 4.
- Figs. 6(A) to (C): are views of different versions of external terminals of the embodiment shown in Fig. 1.
- Fig. 7: is a plan view of a metal frame of the embodiment shown in Fig. 1.
- Fig. 8: is a plan view of a board proper formed in the metal frame shown in Fig. 7.
- Fig. 9: is a plan view of a vibrating body mounted on the board proper shown in Fig. 8.
- Fig. 10: is a plan view of an electrode pattern of the embodiment shown in Fig. 1.
- Fig. 11: is an exploded perspective view of a conventional vibrating gyroscope.
- Fig. 12: is a sectional view of a main part of the conventional vibrating gyroscope shown in Fig. 11.

### Detailed Description of the Preferred Embodiments

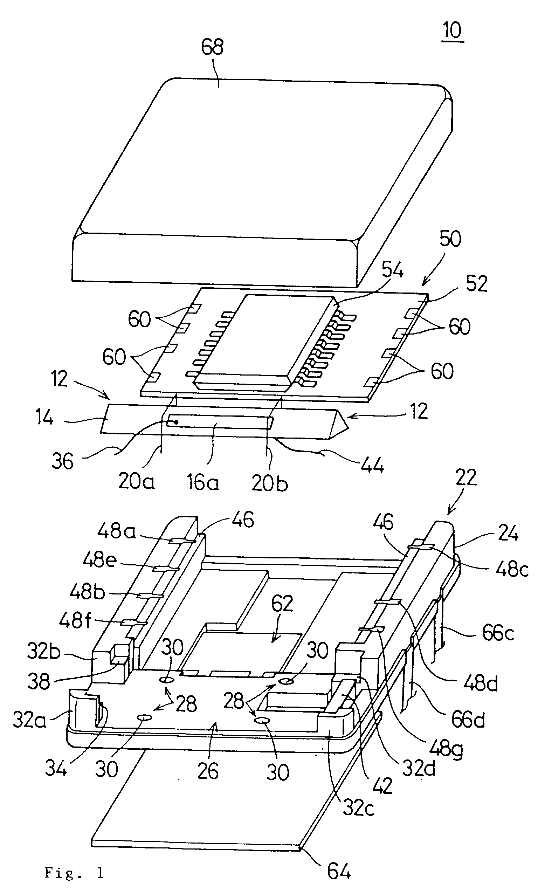

Referring now to the drawings and, in particular, to Figs. 1-5, there is shown a vibrating gyroscope 10 in accordance with the invention which comprises a vibrator 12. The vibrator 12 comprises a vibrating body 14 shaped like an equilateral triangular prism. Of course, the shape of the vibrating body may be that of a cylinder, prism or the like. Modification of the shape of the vibrating body, as well as the peripheral elements would be easily realized by the skilled person in the art.

The vibrating body 14 of this preferred embodiment is made by forming a high-elasticity metal, such as, for example, nickel, iron, chrome or titanium or an alloy of these for example elinver or iron-nickel alloy into an equilateral triangular prism by a drawing process. The vibrating body 14 may alternatively be made of a material generally used to create a mechanical vibration other than a metal, such as, for example, quartz, glass or crystal.

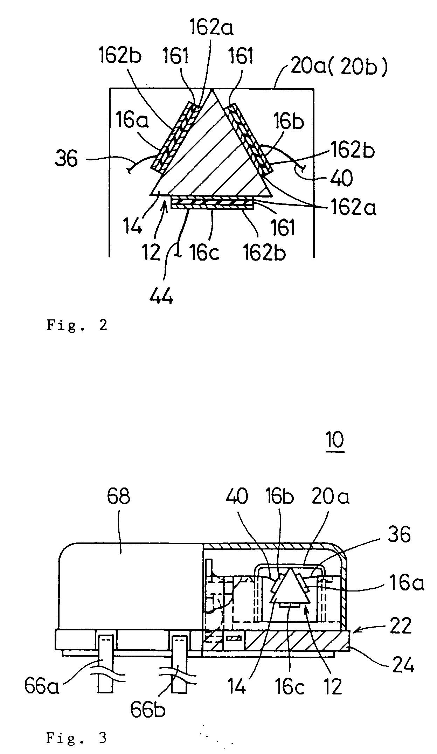

As best shown in Fig. 2, piezoelectric devices 16a, 16b and 16c are fixed to central parts of the three side surfaces of the vibrating body 14. These piezoelectric devices 16a, 16b and 16c each comprise a piezoelectric layer 161 made of, for example, a ceramic. Electrodes 162a and 162b are formed on the main surfaces of each of the piezoelectric layers 161. The electrode 162a on one of the main surfaces of each of these piezoelectric devices 16a, 16b and 16c is, for example, adhered to the respective side surface of the vibrating body 14 with a conducting adhesive. In this preferred embodiment, two piezoelectric devices 16a and 16b are used for driving the vibrating body 14 and for detecting displacement of the vibrating body 14 and the other piezoelectric device 16c is used for returning drive signals to the two piezoelectric devices 16a and 16b.

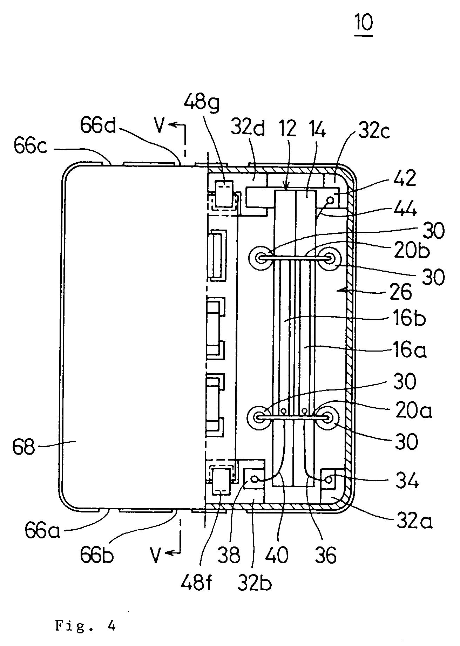

This vibrator 12, as shown in Fig. 1 and Fig. 4, is supported by two support members 20a and 20b. From the points of view of solderability and weldability the support members 20a and 20b are preferably wire members comprising, for example, a strong metal wire, such as molybdenum or titanium wire coated with a material such as nickel, platinum, gold, silver, copper, stainless steel or iron having good solderability and weldability. The support members 20a and 20b are each substantially U-shaped. The central parts of the support members 20a and 20b are fixed to the apex line part of the vibrating body 14 between the piezoelectric devices 16a and 16b. Here, the support members 20a and 20b are preferably fixed to the vibrating body 14 near node points thereof so that they do not suppress vibration of the vibrating body 14. Accordingly, in this preferred embodiment, when the length of the vibrating body 14 is L, the support members 20a and 20b are fixed to the vibrating body 14 at positions 0.224L from the ends of the vibrating body 14. This fixing is effected by soldering or welding.

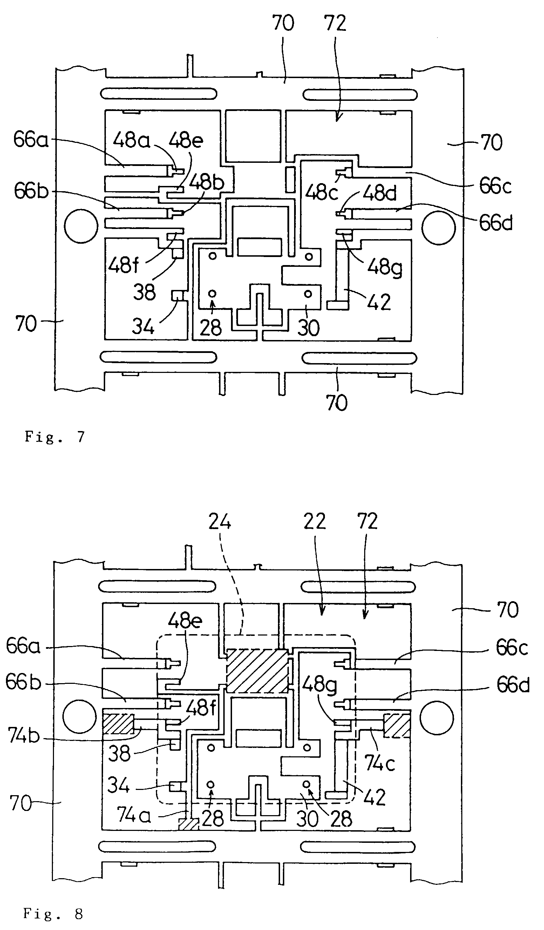

As shown in Fig. 1, the vibrating gyroscope 10 of this embodiment includes a substantially rectangular support board 22. The support board 22 includes a core board 24 made of an insulating material, such as epoxy resin. The core board 24 has a substantially rectangular holding part 26 to which the support members 20a and 20b supporting the vibrator 12 are fixed. Four mounting holes 28 are formed in the surface of the holding part 26. Substantially annular portions of a first terminal electrode 30 are exposed in the mounting holes 28. As shown in Fig. 8 through Fig. 10, the first terminal electrode 30 is substantially rectangular and is embedded in the holding part 26 part of the core board 24. This first terminal electrode 30 is used as a ground electrode or a reference voltage (Vref) electrode. Both ends of each of the support members 20a and 20b are firmly fixed in the mounting holes 28 and electrically connected to the first terminal electrode 30 by, for example, soldering. As a result, the electrodes 162a on one of the main surfaces of each of the piezoelectric devices 16a, 16b and 16c are electrically connected to the first terminal electrode 30 serving as a ground electrode or a reference voltage (Vref) electrode by way of the vibrating body 14 and the support members 20a and 20b. As shown in Fig. 8 through Fig. 10, the first terminal electrode 30 is connected through the inside of the core board 24 to an external terminal 66 which will be further discussed later.

Also, as shown in Fig. 1, projecting parts 32a, 32b, 32c and 32d are formed projecting upward at the four corners of the holding part 26. As shown in Fig. 4, a substantially rectangular second terminal electrode 34 is formed on the surface of the projecting part 32a at one end of the holding part 26, and the second terminal electrode 34 is electrically connected by a lead wire 36 to the electrode 162b on the other main surface of the piezoelectric device 16a. Similarly, a substantially rectangular third terminal electrode 38 is formed on the surface of the other projecting part 32b at the same end of the holding part 26. The third terminal electrode 38 is electrically connected by a lead wire 40 to the electrode 162b on the other main surface of the piezoelectric device 16b. Also, a substantially rectangular fourth terminal electrode 42 is formed extending from the projecting part 32c to the projecting part 32d at the other end of the holding part 26. The terminal electrode 42 is electrically connected by a lead wire 44 to the electrode 162b on the other main surface of the piezoelectric device 16c. As shown in Fig. 8 through Fig. 10, the second terminal electrode 34, the third terminal electrode 38 and the fourth terminal electrode 42 are respectively connected to connecting terminals 48e, 48f and 48g through the inside of the board 24, as will be further discussed below.

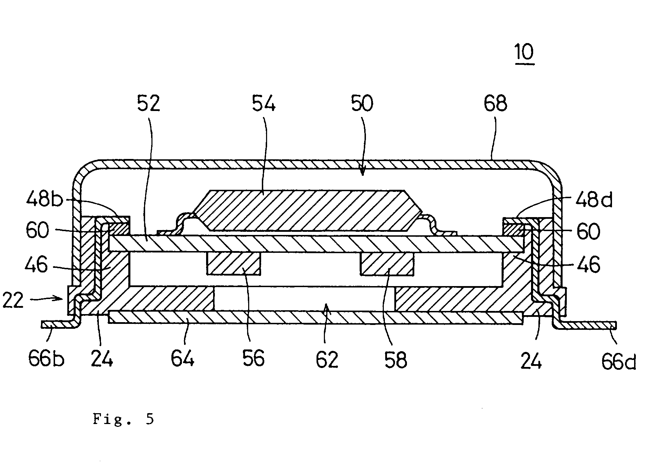

Fig. 5 is a sectional view on the line V-V of Fig. 4. As shown in Fig. 5, the core board 24 of the support board 22 has cross-sectionally crank-shaped stepped parts 46, 46 facing each other across the central part of the board 24. The stepped parts 46, 46 are for mounting a hybrid IC 50 which will be further discussed below. As shown in Fig. 1, these stepped parts 46, 46 are continuous with the projecting part 32b and the projecting part 32d and extend in parallel with the main surface of the holding part 26. Four connecting electrodes 48a, 48b, 48e and 48f are formed with a predetermined mutual spacing on the upper surface of one of the stepped parts 46 and such as to project toward the central part of the core board 24. Similarly, three connecting terminals 48c, 48d and 48g are formed with a predetermined mutual spacing on the upper surface of the other stepped part 46 and such as to project toward the central part of the core board 24. These seven connecting terminals 48a to 48g are electrically connected to electrodes 60 of the hybrid IC 50.

This vibrating gyroscope 10 comprises the hybrid IC 50 as a circuit part. The hybrid IC 50 includes a rectangular board 52 made of for example a ceramic. The board 52 is fixed to the stepped parts 46, 46 of the core board 24 of the support board 22. That is, the hybrid IC 50 is mounted together with the vibrator 12 on the support board 22. An IC 54 is mounted on the upper side of the board 52 of the hybrid IC 50, and, for example, a capacitor 56 and a trimming resistor 58 and the like are mounted on the underside of the board 52. These circuit parts are connected by an electrode pattern (not shown in the drawings) formed on the board 52 and constitute an oscillating circuit for driving and vibrating the vibrator 12 and a detecting circuit for detecting turning angular velocity. The circuit parts are connected to substantially rectangular electrodes 60 formed on both sides of the board 52. For example, seven electrodes 60 are formed, corresponding to the connecting terminals 48a to 48g of the support board 22. These electrodes 60 and the connecting terminals 48a to 48g of the support board 22 are connected by any suitable method, such as soldering.

Also, as shown in Fig. 1 and Fig. 5, a substantially rectangular through hole 62 is formed in a substantially central part of the core board 24 of the support board 22. The through hole 62 is an access hole for use when trimming the trimming resistor 58 mounted on the underside of the board 52 of the hybrid IC 50. A sealing member 64 is fixed to the underside of the support board 22 to close off the through hole 62. The sealing member 64 is made of the same resin as the support board 22. The sealing member 64 may alternatively by made of permalloy or the like to provide a magnetic shielding effect.

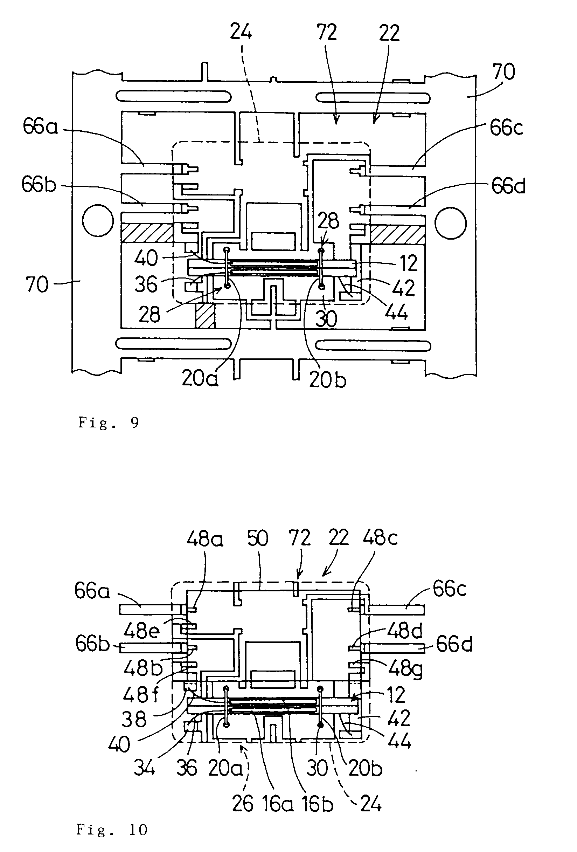

As shown in Fig. 1 and Fig. 3, external terminals 66a, 66b, 66c and 66d for electrically connecting the vibration gyroscope 10 to an outside apparatus are formed on the core board 24 of the support board 22. The external terminals 66a and 66b each have one end extending out of one side of the core board 24, as shown in Fig. 3 and the other ends of the external terminals 66a and 66b pass into the board proper 24 and are connected to the connecting electrodes 48a and 48b, respectively, as shown in Fig. 5 and Fig. 10. Similarly, the external terminals 66c and each have one end extending out of the other side of the board proper 24 as shown in Fig. 1 and the other ends of the external terminals 66c and 66d pass into the board proper 24 and are connected to the connecting electrodes 48c and 48d, respectively, as shown in Fig. 5 and Fig. 10.

The vibrator 12 and the hybrid IC 50 are housed in a boxlike case 68. As shown in Fig. 5, the case 68 is fixed to the support board 22. From the magnetic shielding point of view, this case 68 is made of a material having no magnetic coercive force and of high magnetic permeability, for example, permalloy, 42 Ni or the like.

Next, with reference to Fig. 7 through Fig. 10, a process for manufacturing this vibrating gyroscope 10 will be described. First, a metal frame 70 in the form of a continuous tape made of a thin metal sheet is prepared. Then, an electrode pattern 72 is formed in the metal frame 70. As shown in Fig. 7, the electrode pattern 72 includes parts to become the first terminal electrode 30, the second terminal electrode 34, the third terminal electrode 38, the fourth terminal electrode 42, the connecting terminals 48a to 48g and the external terminals 66a to 66d formed integrally. The electrode pattern 72 is made by a method such as, for example, etching the metal frame 70. Although not shown in the drawings, the multiple electrode patterns 72 are formed in the length direction of the metal frame 70.

Next, as shown in Fig. 8 with a broken line, a core board 24 made of a moldable material, such as for example, epoxy resin is formed on both main surfaces of the metal frame 70, sandwiching the electrode pattern 72. The core board 24 and the electrode pattern 72 form a support board 22. At this time, the parts shown hatched in Fig. 8 are cut off for example by stamping. Then, adjustment electrodes 74a to 74c are formed by being cut from the metal frame 70. The adjustment electrodes 74a to 74c are for use in adjusting the resonance frequency of the vibrator 12. That is, as shown in Fig. 8, when the hybrid IC 50 is not connected, because the external terminals 66a, 66b and 66d are not connected to the second terminal electrode 34, the third terminal electrode 38 and the fourth terminal electrode 42, when adjusting the resonance frequency it is not possible to use the external terminals 66a, 66b and 66d. To overcome this, by using the adjustment electrodes 74a to 74c, it is possible to carry out adjustment of the resonance frequency of the vibrator 12 with the vibrator 12 mounted on the core board 24 formed in the metal frame 70, before the hybrid IC 50 is mounted.

When adjusting the resonance frequency of the vibrator 12, first, the support members 20a and 20b are fixed in the mounting holes 28 and electrically connected to the first terminal electrode 30. As shown in Fig. 8, the first terminal electrode 30 is connected to the external electrode 66c. As described above, the piezoelectric devices 16a, 16b and 16c on the vibrator 12 are electrically connected by the lead wires 36, 40 and 44 to the second terminal electrode 34, the third terminal electrode 38 and the fourth terminal electrode 42, respectively. As shown in Fig. 8, the second terminal electrode 34 is formed integrally with the adjustment electrode 74a. Also, the third terminal electrode 38 is formed integrally with the adjustment electrode 74b and the fourth terminal electrode 42 is formed integrally with the adjustment electrode 74c. As a result, it is possible to bring a measuring probe into contact with these adjustment electrodes 74a, 74b and 74c and the external electrode 66c and carry out adjustment of the resonance frequency of the vibrator 12 while measuring the output of the vibrator 12 with the measuring probe.

After this resonance frequency adjustment, as shown in Fig. 9 with diagonal lines, the adjustment electrodes 74a, 74b and 74c are cut off. Then, as shown in Fig. 10, the hybrid IC 50 is mounted on the board proper 24 of the support board 22. The hybrid IC 50 is electrically connected to the connecting terminals 48a to 48g. After that, all the terminals of the electrode pattern 72 are cut from the metal frame 70 and the vibrating gyroscope 10 of this embodiment is obtained.

In the vibrating gyroscope 10 of this embodiment, the first terminal electrode 30, the second terminal electrode 34, the third terminal electrode 38, the fourth terminal electrode 42, the connecting terminals 48a to 48g and the external terminals 66a, 66b, 66c and 66d are formed integrally from thin metal sheet inside the core board 24 of the support board 22 and are formed integrally with the board proper 24 made of resin or the like. As a result, the amount of soldering involved in assembling the gyroscope can be reduced and it is possible to simplify the manufacturing process. Furthermore, because the support board 22 performs the functions of both a mounting board and a base member of a conventional vibrating gyroscope, compared to a conventional vibrating gyroscope wherein these are formed as separate parts, reduction of the number of parts is possible and the construction can be simplified. As a result, assembly is made easy.

Also, with the vibrating gyroscope 10 of this preferred embodiment, it is possible to carry out adjustment of the resonance frequency of the vibrator 12 on the metal frame 70, before the hybrid IC 50 is mounted. It is also possible to assemble the vibrating gyroscope 10 on the metal frame 70. As a result, the resonance frequency adjustment and assembly work is made easier and manufacturing costs can be reduced.

Furthermore, because the vibrating gyroscope 10 of this preferred embodiment has a reduced number of parts and the hybrid IC 50 is mounted alongside the vibrator instead of being stacked with respect to the vibrator in the height direction thereof, the vibrating gyroscope 10 can be made low- height. As a result, when the vibrating gyroscope 10 of this preferred embodiment is built into an apparatus such as, for example, a navigation system or a camera shake detecting system, the vibrating gyroscope does not prevent the apparatus from being made compact.

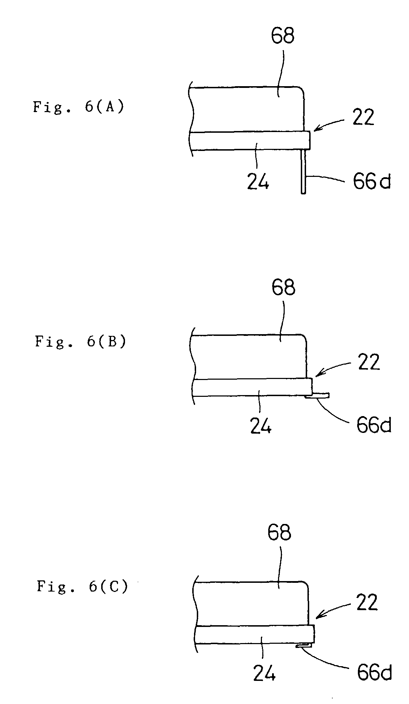

Also, because the external terminals 66a, 66b, 66c and 66d can be formed in various different shapes, for example, extending vertically downward from the core board 24 as shown in Fig. 6 (A), extending horizontally outward from the core board 24 as shown in Fig. 6 (B) or bent along the underside of the core board 24 as shown in Fig. 6 (C), the vibrating gyroscope 10 can easily be made to fit the requirements of an apparatus into which it is to be built and can easily be surface-mounted.

Although the present invention has been described in relation to particular embodiments thereof, many other variations and modifications and other uses will become apparent to those skilled in the art. It is preferred, therefore, that the present invention be limited not by the specific disclosure herein, but only by the appended claims.

## Claims

1. A vibrating gyroscope, comprising:
(a) a vibrating body (14):
(b) excitation means (16c) attached to said vibrating body, for exciting said vibrating body;
(c) vibration receiving means (16a, 16b), attached to said vibrating body, for receiving the vibration of said vibrating body and outputting a vibration signal;
(d) means (20a, 20b) for supporting said vibrating body;
(e) a circuit board (50) including:
an oscillator means (52, 54, 56, 58);
a first connecting means (60) connected to said oscillator;
a vibration detecting device (52, 54, 56, 58) outputting a signal indicative of a vibration level in response to an input vibration signal;
a second connecting means (60) connected to an input of said detecting device; and
a third connecting means (60) connected to an output of said detecting device; and
(f) a support board (22) for mounting said supporting means and said circuit board, said support board including:
a fourth connecting means (42) connected to said excitation means;
a fifth connecting means (34, 38) connected to said vibration receiving means; and
a sixth connecting means (66a - 66d) connected to said detecting device;
wherein respective connections between said first and fourth, second and fifth, third and sixth connecting means are established when said circuit board (50) is mounted on said support board (22).

2. The vibrating gyroscope according to Claim 1, further comprising:
a housing (68) provided on said support board so as to shield said circuit board and said vibrating body.

3. The vibrating gyroscope according to Claim 2, wherein said support board includes an opening (62) for enabling said circuit board to be accessed from the outside of the housing.

4. The vibrating gyroscope according to Claim 3 further comprising means (64) for shielding said opening.

5. The vibrating gyroscope according to Claim 1, wherein said supporting means (20a, 20b) support said vibrating body in the vicinity of the vibration node point of the vibrating body.

6. The vibrating gyroscope according to Claim 1, wherein said vibrating body (14) and said circuit board (50) are mounted on different parts of the support board.

7. A method of producing a vibrating gyroscope comprising the steps of:
forming first (42), second (34, 38) and third (66a-d) connecting elements by etching a thin metal film (70);
fixing said connecting elements (42, 34, 38, 66a-d) on a substrate (24);
mounting, on the remaining portion of said substrate, a vibrator unit (12) including a vibrating body, a device for exciting said vibrating body, a device for receiving the vibration of said vibrating body, and a supporting element for supporting said vibrating body;
connecting said first connecting element (42) to said excitation device (44), and connecting said second connecting element (34, 38) to said receiving device (36);
mounting, on said substrate, a circuit board (50) including an oscillator, a fourth connecting element (60) connected to an output of said oscillator, a converter outputting a signal indicative of vibration level in response to input vibration signal, a fifth connecting element (60) connected to input of said converter, and a sixth connecting element (60) connected to an output of said converter, wherein said first, second and third connecting elements are formed so that connections between said first and fourth, second and fifth, and third and sixth connecting elements are respectively established when said circuit board (50) is mounted on said substrate (24).

8. The method of producing a vibrating gyroscope according to Claim 7, wherein said forming step further comprises the steps of:
forming a seventh and eighth connecting element (74a-c) for connecting an external device;
connecting between said first and seventh, and second and eighth connecting elements respectively.

9. The method of producing a vibrating gyroscope according to Claim 8, further comprising the step of:
performing a diagnosis of the vibration of said vibrating body by connecting an output and input of an external diagnostic device to said seventh and eighth connecting elements.

10. The method of producing a vibrating gyroscope according to Claim 9, further comprising the step of:
removing connections between said first and seventh, and second and eighth connecting elements in response to the completion of said step of performing the diagnosis.

## Patentansprüche

1. Ein Vibrationsgyroskop mit folgenden Merkmalen:
(a) einem Schwingkörper (14);
(b) einer Erregungseinrichtung (16c), die an dem Schwingkörper (14) angebracht ist, zum Erregen des Schwingkörpers;
(c) einer Schwingungsempfangseinrichtung (16a, 16b), die an dem Schwingkörper angebracht ist, zum Empfangen der Schwingung des Schwingkörpers und zum Ausgeben eines Schwingungssignals;
(d) einer Einrichtung (20a, 20b) zum Tragen des Schwingkörpers;
(e) einer Schaltungsplatine (50), die folgende Merkmale aufweist:
eine Oszillatoreinrichtung (52, 54, 56, 58);
eine erste Verbindungseinrichtung (60), die mit dem Oszillator verbunden ist;
ein Schwingungserfassungselement (52, 54, 56, 58), das ein Signal ausgibt, das einen Schwingungspegel ansprechend auf ein Eingangsschwingungssignal anzeigt;
eine zweite Verbindungseinrichtung (60), die mit einem Eingang des Erfassungselements verbunden ist; und
eine dritte Verbindungseinrichtung (60), die mit einem Ausgang des Erfassungselements verbunden ist; und
(f) einer Trägerplatine (22) zum Befestigen der Trägereinrichtung und der Schaltungsplatine, wobei die Trägerplatine folgende Merkmale aufweist:
eine vierte Verbindungseinrichtung (42), die mit der Erregungseinrichtung verbunden ist;
eine fünfte Verbindungseinrichtung (34, 38), die mit der Schwingungsempfangseinrichtung verbunden ist; und
eine sechste Verbindungseinrichtung (66a - 66d), die mit dem Erfassungselement verbunden ist;
wobei jeweilige Verbindungen zwischen der ersten und vierten, zweiten und fünften, dritten und sechsten Verbindungseinrichtung errichtet sind, wenn die Schaltungsplatine (50) an der Trägerplatine (22) angebracht ist.

2. Das Vibrationsgyroskop gemäß Anspruch 1, das ferner folgendes Merkmal aufweist:
ein Gehäuse (68), das auf der Trägerplatine vorgesehen ist, um die Schaltungsplatine und den Schwingkörper abzuschirmen.

3. Das Vibrationsgyroskop gemäß Anspruch 2, bei dem die Trägerplatine eine Öffnung (62) zum Ermöglichen eines Zugriffs auf die Schaltungsplatine von außerhalb des Gehäuses aufweist.

4. Das Vibrationsgyroskop gemäß Anspruch 3, das ferner eine Einrichtung (64) zum Abschirmen der Öffnung aufweist.

5. Das Vibrationsgyroskop gemäß Anspruch 1, bei dem die Trägereinrichtung (20a, 20b) den Schwingkörper in der Nähe des Schwingungsknotenpunkts des Schwingkörpers trägt.

6. Das Vibrationsgyroskop gemäß Anspruch 1, bei dem der Schwingkörper (14) und die Schaltungsplatine (50) an unterschiedlichen Teilen der Trägerplatine befestigt sind.

7. Ein Verfahren zum Herstellen eines Vibrationsgyroskops mit folgenden Schritten:
Bilden eines ersten (42), eines zweiten (34, 38) und eines dritten (66a - 66d) Verbindungselements durch Ätzen eines dünnen Metallfilms (70);
Befestigen der Verbindungselemente (42, 34, 38, 66a - 66d) an einem Substrat (24);
Anbringen, an dem restlichen Abschnitt des Substrats, einer Schwingereinheit (12), die einen Schwingkörper, ein Element zum Erregen des Schwingkörpers, ein Element zum Empfangen der Schwingung des Schwingkörpers und ein Trägerelement zum Tragen des Schwingkörpers aufweist;
Verbinden des ersten Verbindungselements (42) mit dem Erregungselement (44), und Verbinden des zweiten Verbindungselements (34, 38) mit dem Empfangselement (36);
Anbringen, an dem Substrat, einer Schaltungsplatine (50), die einen Oszillator, ein viertes Verbindungselement (60), das mit einem Ausgang des Oszillators verbunden ist, einen Umwandler, der ein Signal ausgibt, das einen Schwingungspegel ansprechend auf ein Eingangsschwingungssignal anzeigt, ein fünftes Verbindungselement (60), das mit einem Eingang des Wandlers verbunden ist, und ein sechstes Verbindungselement (60) aufweist, das mit einem Ausgang des Wandlers verbunden ist, wobei das erste, das zweite und das dritte Verbindungselement so gebildet sind, daß Verbindungen zwischen dem ersten und vierten, dem zweiten und fünften und dem dritten und sechsten Verbindungselement jeweils errichtet werden, wenn die Schaltungsplatine (50) an dem Substrat (24) angebracht wird.

8. Das Verfahren zum Herstellen eines Vibrationsgyroskops gemäß Anspruch 7, bei dem der Schritt des Bildens ferner folgende Schritte aufweist:
Bilden eines siebten und eines achten Verbindungselements (74a - 74c) zum Verbinden eines äußeren Elements;
Verbinden zwischen dem ersten und siebten bzw. dem zweiten und achten Verbindungselement.

9. Das Verfahren zum Herstellen eines Vibrationsgyroskops gemäß Anspruch 8, das ferner folgenden Schritt aufweist:
Durchführen einer Diagnose der Schwingung des Schwingkörpers durch Verbinden eines Ausgangs und eines Eingangs eines äußeren Diagnosegeräts mit dem siebten und dem achten Verbindungselement.

10. Das Verfahren zum Herstellen eines Vibrationsgyroskops gemäß Anspruch 9, das ferner folgenden Schritt aufweist:
Entfernen von Verbindungen zwischen dem ersten und siebten und dem zweiten und achten Verbindungselement ansprechend auf die Fertigstellung des Schritts des Durchführens der Diagnose.

## Revendications

1. Gyroscope à vibration, comportant:
(a) un corps vibrant (14);
(b) des moyens d'excitation (16c) fixés sur ledit corps vibrant, afin d'exciter ledit corps vibrant;
(c) des moyens de réception de vibration (16a, 16b), fixés sur ledit corps vibrant, afin de recevoir la vibration dudit corps vibrant et délivrer un signal de vibration;
(d) des moyens (20a, 20b) destinés à supporter ledit corps vibrant;
(e) une plaque de circuit (50) comprenant :
des moyens d'oscillateur (52, 54, 56, 58);
des premiers moyens de connexion (60) reliés audit oscillateur;
un dispositif de détection de vibration (52, 54, 56, 58) qui délivre un signal indicatif d'un niveau de vibration en réponse à un signal de vibration d'entrée;
des seconds moyens de connexion (60) reliés à une entrée dudit dispositif de détection; et
des troisièmes moyens de connexion (60) reliés à une sortie dudit dispositif de détection; et
(f) une plaque de support (22) destinée à monter lesdits moyens de support et ladite plaque de circuit, ladite plaque de support comprenant:
des quatrièmes moyens de connexion (42) reliés aux dits moyens d'excitation;
des cinquièmes moyens de connexion (34, 38) reliés aux dits moyens de réception de vibration; et
des sixièmes moyens de connexion (66a à 66d) reliés audit dispositif de détection;
des connexions respectives entre lesdits premiers et quatrièmes, deuxièmes et cinquièmes, troisième et sixièmes moyens de connexion sont établies lorsque ladite plaque de circuit (50) est montée sur ladite plaque de support (22).

2. Gyroscope à vibration selon la revendication 1, comportant en outre:
un boîtier (68) prévu sur ladite plaque de support afin de protéger ladite plaque de circuit et ledit corps vibrant.

3. Gyroscope à vibration selon la revendication 2, dans lequel ladite plaque de support comprend une ouverture (62) destinée à permettre à la plaque de circuit d'être accédée de l'extérieur du boîtier.

4. Gyroscope à vibration selon la revendication 3, comportant en outre des moyens (64) destinés à protéger ladite ouverture.

5. Gyroscope à vibration selon la revendication 1, dans lequel lesdits moyens de support (20a, 20b) supportent ledit corps vibrant au voisinage du point nodal de vibration du corps vibrant.

6. Gyroscope à vibration selon la revendication 1, dans lequel ledit corps vibrant (14) et ladite plaque de circuit (50) sont montés sur des parties différentes de la plaque de support.

7. Procédé de fabrication d'un gyroscope à vibration comportant les étapes consistant à :
former des premier (42), deuxième (34, 38) et troisième éléments de connexion (66a à d) par gravure d'un film métallique mince (70);
fixer lesdits éléments de connexion (42, 34, 38, 66a à d) sur un substrat (24);
monter, sur la partie restante dudit substrat, une unité de vibrateur (12) comprenant un corps vibrant, un dispositif destiné à exciter ledit corps vibrant, un dispositif destiné à recevoir la vibration dudit corps vibrant, et un élément de support destiné à supporter ledit corps vibrant;
relier ledit premier élément de connexion (42) audit dispositif d'excitation (44), et relier ledit deuxième élément de connexion (34, 38) audit dispositif de réception (36);
monter, sur ledit substrat, une plaque de circuit (50) comprenant un oscillateur, un quatrième élément de connexion (60) relié à une sortie dudit oscillateur, un convertisseur qui délivre un signal indicatif du niveau de vibration en réponse au signal de vibration d'entrée, un cinquième élément de connexion (60) relié à l'entrée dudit convertisseur, et un sixième élément de connexion (60) relié à une sortie dudit convertisseur, lesdits premier, deuxième et troisième éléments de connexion étant formés de telle sorte que des connexions entre lesdits premier et quatrième, deuxième et cinquième, et troisième et sixième éléments de connexion sont établies de manière respective quand ladite plaque de circuit (50) est montée sur ledit substrat (24).

8. Procédé de fabrication d'un gyroscope à vibration selon la revendication 7, dans lequel ladite étape de formation comporte en outre les étapes consistant à :
former un septième et un huitième élément de connexion (74a à c) afin de relier un dispositif externe;
effectuer la connexion entre lesdits premier et septième, et deuxième et huitième éléments de connexion respectivement.

9. Procédé de fabrication d'un gyroscope à vibration selon la revendication 8, comportant en outre l'étape consistant à :
réaliser un diagnostic de la vibration dudit corps vibrant en reliant une sortie et une entrée d'un dispositif de diagnostic externe aux dits septième et huitième éléments de connexion.

10. Procédé de fabrication d'un gyroscope à vibration selon la revendication 9, comportant en outre l'étape consistant à :
enlever les connexions entre lesdits premier et septième, et deuxième et huitième éléments de connexion en réponse à la fin de ladite étape de réalisation du diagnostic.
